(19) Europäisches Patentamt
European Patent Office
Office européen des brevets

(11) Veröffentlichungsnummer: **0 087 703**
**B1**

# (12) EUROPÄISCHE PATENTSCHRIFT

(45) Veröffentlichungstag der Patentschrift: **10.04.85**

(51) Int. Cl.⁴: **C 09 B 67/24** // D06P1/382

(21) Anmeldenummer: **83101616.7**

(22) Anmeldetag: **21.02.83**

(54) **Verfahren zur Herstellung von Reaktivfarbstoffpräparationen.**

(30) Priorität: **03.03.82 DE 3207534**
**29.04.82 DE 3215933**

(43) Veröffentlichungstag der Anmeldung: **07.09.83 Patentblatt 83/36**

(45) Bekanntmachung des Hinweises auf die Patenterteilung: **10.04.85 Patentblatt 85/15**

(84) Benannte Vertragsstaaten: **CH DE FR GB IT LI**

(56) Entgegenhaltungen:
**EP-A-0 024 654**
**EP-A-0 029 960**
**FR-A-2 305 473**
**GB-A-838 337**
**GB-A-880 393**
**GB-A-1 216 975**

(73) Patentinhaber: **BAYER AG, Konzernverwaltung RP Patentabteilung, D-5090 Leverkusen 1 Bayerwerk (DE)**

(72) Erfinder: **Wolff, Joachim, Dr., Neuenhauserweg 6, D-5060 Bergisch-Gladbach 2 (DE)**
Erfinder: **Karlheinz, Wolf, Dr., Paul-Klee-Strasse 77, D-5090 Leverkusen 1 (DE)**
Erfinder: **Hörnle, Reinhold, Dr., Hufelandstrasse 42, D-5000 Köln (DE)**
Erfinder: **Ditzer, Reiner, Dr., In der Follmühle 21, D-5068 Odenthal (DE)**
Erfinder: **Falkenberg, Kurt, Dr., Robert-Blum-Strasse 9, D-5000 Koeln 41 (DE)**

**EP 0 087 703 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein neues Verfahren zur Herstellung von Reaktivfarbstoffpräparationen mit heterocyclischer Reaktivkomponente. Diese Reaktivfarbstoffe sind formelmässig wie folgt zu charakterisieren

$$(M^1O_3S)_n-A-\underset{\displaystyle R^1}{\underset{|}{N}}-R \qquad (1)$$

worin

$M^1$ = $NH_4$, Li, Na oder K,
R = heterocyclischer Reaktivrest,
$R^1$ = Wasserstoff oder Alkyl ($C_1$-$C_4$),
A = Rest eines Farbstoffchromophors, und
n = ganze Zahl von 1 bis 5.

Das neue Verfahren ist dadurch gekennzeichnet, dass man einen sulfogruppenhaltigen, reaktivgruppenfreien Farbstoff der Formel

$$(M^2O_3S)_n-A-\underset{\displaystyle R^1}{\underset{|}{N}}-H \qquad (1a)$$

wobei

$M^2$ = H, $NH_4$, Li, Na oder K, und
$R^1$, A und n die oben angegebene Bedeutung besitzen, mit einem Salzgehalt von höchstens 8 Gew.-% und bevorzugt höchstens 5 Gew.-% (bezogen auf die Farbstoffmenge) im wässerigen, ggf. konzentrationserhöhende Zusatzstoffe enthaltenden Medium in Gegenwart säurebindender Mittel mit der heterocyclischen Reaktivkomponente der Formel

$$R-X \qquad (1b)$$

wobei R die oben angegebene Bedeutung besitzt und X für Chlor oder Fluor steht, umsetzt und die so erhaltene Flüssigeinstellung ggf. puffert oder die Flüssigeinstellung zur Trockene bringt und anschliessend ggf. zu einem Pulver mahlt.

Vor und/oder nach dem Trocknen können übliche Einstellmittel und/oder Puffersubstanzen, die einen pH-Wert von 6,5 bis 8 stabilisieren, untergemischt werden. Die Trocknung kann z. B. in einem Umluftschrank, mit Schaufeltrockner, Walzentrockner, bevorzugt jedoch durch Sprühtrocknung mit einer Ein- oder Zweistoffdüse oder Zerstäuberscheibe erfolgen. Bei einigen Farbstoffen ist es vorteilhaft, dass man eine heisse Lösung der Komponenten sprühtrocknet. Die Konzentration der Farbstoffe im Wasser beträgt bei der Sprühtrocknung üblicherweise 10 bis 45 Gew.-%.

In Formel 1 steht $M^1$ vorzugsweise für Li und $R^1$ vorzugsweise für Wasserstoff oder Methyl.

Es ist bereits bekannt, konzentrierte Lösungen von Reaktivfarbstoffen nach folgenden Verfahren herzustellen.

1. Der salzhaltige Presskuchen bzw. die trockene salzhaltige Fabrikware wird unter Zusatz von geeigneten Lösevermittlern in Wasser gelöst. Aufgrund des hohen Salzgehaltes ist dieses Verfahren zur Herstellung konzentrierter Lösungen der sulfonsäuregruppenhaltigen Reaktivfarbstoffe 1 jedoch oft nicht geeignet.

2. Ein weiteres Verfahren zur Herstellung konzentrierter Reaktivfarbstofflösungen ist in der DE-OS Nr. 2948292 A 1 beschrieben. Die verdünnte, salzhaltige Reaktionsbrühe oder eine verdünnte, wässerige Lösung des Farbstoffs wird der Druckpermeation unterworfen und dabei entsalzt und aufkonzentriert. Das Verfahren ist aufwendig und häufig tritt bei der Druckpermeation teilweise Hydrolyse der Reaktivgruppe ein.

3. Wie in der DE-OS Nr. 2948292 A 1 ebenfalls beschrieben, wird eine verdünnte, salzhaltige Reaktionsbrühe oder eine verdünnte wässerige Lösung des Farbstoffs der Druckpermeation unterworfen, dabei entsalzt, aufkonzentriert und anschliessend nach üblichen Methoden getrocknet. Dieses Verfahren ist sehr aufwendig.

4. Nicht geeignet für die Herstellung konzentrierter Lösungen sowie fester Präparationen von sulfonsäuregruppenhaltigen Reaktivfarbstoffen 1 ist die Aussalzung des Reaktivfarbstoffs mit flüchtigen Ammoniumsalzen und anschliessende Trocknung bei erhöhter Temperatur. Der Reaktivfarbstoff wird bei diesen Verfahren zum grössten Teil hydrolysiert.

Das erfindungsgemässe Verfahren zur Herstellung konzentrierter flüssiger Präparationen der Reaktivfarbstoffe 1 weist gegenüber diesen Herstellungsverfahren den überraschenden Vorteil auf, dass die betreffende Flüssigeinstellung direkt als Endprodukt bei der Farbstoffsynthese erhalten wird und somit eine Einsparung von aufwendigen Arbeitsschritten erzielt wird und dass die daraus herstellbare Pulvereinstellung eine ausgezeichnete Löslichkeit in kaltem und heissem Wasser besitzt.

Bei den konzentrierten flüssigen Präparationen der Reaktivfarbstoffe kann es sich sowohl um konzentrierte Lösungen als auch um konzentrierte Flüssigkristalleinstellungen handeln. Dies ist abhängig von den Eigenschaften des eingesetzten Reaktivfarbstoffs, d. h. seinem Verhalten bei den angewandten Reaktionsbedingungen.

Das erfindungsgemässe Verfahren zur Herstellung von festen Präparationen der Reaktivfarbstoffe 1 mit ausgezeichneter Löslichkeit in kaltem und heissem Wasser weist gegenüber den obengenannten Herstellungsverfahren den überraschenden Vorteil auf, dass man ohne zusätzliche Verfahrensschritte sehr gut lösliche Pulver oder Granulate mit einem geringen Gehalt an hydrolysierten Reaktivgruppen erhält.

Unter heterocyclischen Reaktivresten R in der Formel 1 werden solche verstanden, die eine oder mehrere reaktive Gruppen oder abspaltbare Substituenten aufweisen, welche beim Aufbringen der Farbstoffe auf Cellulosematerialien in Gegenwart säurebindender Mittel und ggf. unter Einwirkung von Wärme mit den Hydroxylgruppen der Cellulose oder beim Aufbringen auf Superpolyamidfasern, wie Wolle, mit den NH-Gruppen dieser Fasern unter Ausbildung kovalenter Bindungen zu reagieren vermögen.

Geeignete Reaktivgruppen, welche mindestens einen abspaltbaren Substituenten an einen heterocyclischen Rest gebunden enthalten, sind unter

anderem solche, die mindestens einen reaktiven Substituenten an einen 5- oder 6gliedrigen heterocyclischen Ring gebunden enthalten, wie an einen Monazin-, Diazin-, Triazin-, z. B. Pyridin-, Pyrimidin-, Pyridazin-, Thiazin-, Oxazin- oder asymmetrischen oder symmetrischen Triazinring, oder an ein derartiges Ringsystem, welches einen oder mehrere ankondensierte Ringe aufweist, wie ein Chinolin-, Phthalazin-, Chinnolin- Chinazolin-, Chinoxalin-, Acridin-, Phenazin- und Phenanthridinringsystem; die 5- oder 6gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6gliedrige carbocyclische Ringe ankondensiert enthalten können.

Unter den reaktiven Substituenten am Heterocyclus sind beispielsweise zu erwähnen

Halogen (Cl, Br oder F), Azido-$(N_3)$, Rhodanido, Thio, Thiolether, Oxyether.

Bevorzugt sind im Fall der vorliegenden Erfindung Reaktivfarbstoffe mit Reaktivgruppen auf Basis folgender Systeme

Mono- oder dihalogensymmetrische Triazinylreste, Mono-, Di- oder Trihalogenpyrimidinylreste oder halogensubstituierte Chinoxalinylcarbonylreste.

Insbesondere bevorzugt sind folgende Reaktivgruppen der Formeln 2, 3 und 4

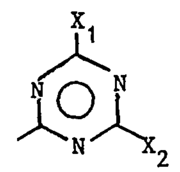

(2)

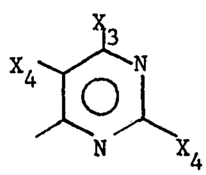

(3)

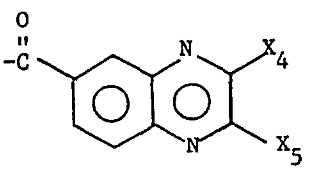

(4)

wobei in den Formeln 2, 3 und 4 gilt

$X_1$ = F

$X_2$ = Cl, F, $NH_2$, $NHR^2$, $OR^2$, $CH_2R^2$, $SR^2$

$X_3$ = Cl, F, $CH_3$

$X_4$ = Cl, F und

$X_5$ = Cl, F, $CH_3$

und wobei

$R^2$ = Wasserstoff, Alkyl (insbesondere ggf. durch OH, $SO_3H$, COOH substituiertes $C_1$-$C_4$-Alkyl), Aryl (insbesondere ggf. durch $SO_3H$, $C_1$-$C_4$-Alkyl, $C_1$-$C_4$-Alkoxy substituiertes Phenyl), Aralkyl (insbesondere ggf. durch $SO_3H$, $C_1$-$C_4$-Alkyl, $C_1$-$C_4$-Alkoxy substituiertes Benzyl).

Farbstoffe, welche die obengenannten Reaktivgruppensysteme enthalten, sind beispielsweise aus folgenden Publikationen bekannt

US-PS Nrn. 3377336, 3527760, 3669951, GB-PS Nrn. 1169254, 1188606, DE-PS Nr. 1644208, DE-OS Nr. 2817780, ES-PS Nr. 479771.

Die erfindungsgemäss herzustellenden Farbstoffe können den verschiedensten Klassen angehören, z. B. der Reihe der metallfreien oder metallhaltigen Mono- oder Polyazofarbstoffe, metallfreien oder metallhaltigen Azaporphinfarbstoffe, wie Kupfer-, Kobalt- oder Nickelphthalocyaninfarbstoffe, der Anthrachinon-, Oxazin-, Dioxazin-, Triphenylmethan-, Nitro-, Azomethin-, metallfreien oder metallhaltigen Formazanfarbstoffe.

Der für das erfindungsgemässe Herstellungsverfahren von konzentrierten Reaktivfarbstofflösungen bzw. Flüssigkristalleinstellungen verwendete salzarme (Salzgehalt höchstens 8 Gew.-%, bevorzugt 5 Gew.-%) Farbstoff

$$(M^2O_3S)_n\text{-}A\text{-}\underset{\displaystyle R^1}{\underset{|}{N}}\text{-}H$$

kann wie folgt hergestellt werden (wobei A, $M^2$ und n die oben angegebene Bedeutung besitzen).

A) Der Farbstoff

$$(M^2O_3S)_n\text{-}A\text{-}\underset{\displaystyle R^1}{\underset{|}{N}}\text{-}H$$

wird aus der Reaktionsbrühe durch Zugabe von Ammoniumsalzen, die bei Temperaturen über 40 bis 250° C und einem Druck von 13 bis 1010 mbar flüchtig sind, ausgesalzen und der Presskuchen anschliessend unter diesen Bedingungen getrocknet.

Als Ammoniumsalze eignen sich bevorzugt Ammoniumcarbamat und/oder Ammonhydrogensalze bevorzugt Ammoniumhydrogencarbonat. Ist während der Synthese der Farbstoff

$$(M^2O_3S)_n\text{-}A\text{-}\underset{\displaystyle R^1}{\underset{|}{N}}\text{-}H$$

in der Reaktionsbrühe bereits ausgefallen, so wird er abgesaugt und der feuchte Presskuchen mit einer Lösung eines flüchtigen Ammoniumsalzes gewaschen. Nach Trocknung fällt so in beiden Fällen der Farbstoff

$$(M^2O_3S)_n\text{-}A\text{-}\underset{\displaystyle R^1}{\underset{|}{N}}\text{-}H$$

als salzarmes Trockengut an und kann so für die weitere Synthese verwendet werden.

B) Der Farbstoff

$$(M^2O_3S)_n\text{-}A\text{-}\underset{\displaystyle R^1}{\underset{|}{N}}\text{-}H$$

wird mit wenig nichtflüchtigem Salz beispielsweise NaCl, LiCl oder KCl oder durch Zusatz von Säure ausgefällt, abgesaugt und gf. mit wenig Lösung

des Fällungsmittels oder bevorzugt eines flüchtigen Salzes oder mit verdünnten Säuren gewaschen. Ist der Farbstoff bereits nach der Reaktion ausgefallen, genügt ein Waschprozess der Lösung eines nichtflüchtigen oder eines flüchtigen Salzes oder bevorzugt einer verdünnten Säure oder gf. mit reinem Wasser. Wird zum Waschen des Presskuchens gesättigte Ammoniumsalzlösung verwendet, so ist eine Trocknung gemäss A nötig, um den salzarmen Farbstoff

$$(M^2O_3S)_n-A-\underset{\displaystyle R^1}{\underset{|}{N}}-H$$

zu erhalten.

C) Die Reaktionsbrühe des Farbstoffs

$$(M^2O_3S)_n-A-\underset{\displaystyle R^1}{\underset{|}{N}}-H$$

wird der Druckpermeation unterworfen und dabei aufkonzentriert und entsalzt. Das salzarme Konzentrat kann für die weitere Synthese verwendet werden.

Als besonders bevorzugt für die Herstellung des salzarmen Farbstoffs

$$(M^2O_3S)_n-A-\underset{\displaystyle R^1}{\underset{|}{N}}-H$$

sind Verfahren A und B anzusehen.

Als konzentrationserhöhende Zusatzstoffe bei dem neuen Herstellungsverfahren können z. B. Verwendung finden: niedere aliphatische oder cyclische Amide, bevorzugt ε-Caprolactam und N-Methylpyrrolidon und/oder niedere aliphatische Sulfoxide und/oder schwefelhaltige Verbindungen wie Dimethylsulfon, Diethylsulfon, Sulfolan, Sulfolen und deren in α-und/oder β-Stellung substituierten Derivate und/oder hydrotrope Verbindungen wie Thioharnstoff und Harnstoff sowie die dazu gehörigen Derivate, besonders bevorzugt N,N'-Dimethylharnstoff.

Als säurebindende Mittel kommen vorzugsweise Alkalien wie NaOH, KOH, $Na_2CO_3$, $K_2CO_3$, $Ca(OH)_2$, LiOH, $Li_2CO_3$ insbesondere aber LiOH und $Li_2CO_3$ in Frage. Mit Hilfe der säurebindenden Mittel wird bevorzugt auf pH 5-8 abgestumpft.

Als gf. zugesetzte Puffersubstanzen kommen vorzugsweise solche in Frage, die im Bereich pH 6,5 bis 8,0 puffern. Beispielhaft seien die folgenden Puffersysteme genannt:

1. Monokaliumdihydrogenphosphat/Dikaliumhydrogenphosphat-Mischungen.
2. Borsäure mit NaOH bzw. LiOH auf pH 7-8 gestellt.
3. Kaliumhydrogenphthalat mit NaOH bzw. LiOH auf pH 8 gestellt.

Die nach dem erfindungsgemässen Verfahren hergestellten flüssigen Präparationen von Reaktivfarbstoffen (konzentrierte Lösungen oder Flüssigkristalleinstellungen) haben vorzugsweise folgende Zusammensetzung.

Der Reaktivfarbstoffgehalt in der erfindungsgemäss hergestellten konzentrierten Lösung oder konzentrierten Flüssigkristalleinstellung liegt bei 10 bis 40 Gew.-% (bevorzugt 13 bis 30 Gew.-%). Ausserdem enthält die Flüssigeinstellung bis zu 2 Gew.-% Puffersubstanzen für den pH-Wert 6,5 bis 8, bevorzugt 0,5 bis 1 Gew.-% Puffer, ggf. bis zu 30 Gew.-% eines konzentrationserhöhenden Zusatzstoffes, sowie bis zu 4 Gew.-% Alkalisalze, bevorzugt Lithiumsalze.

Gegenstand der Erfindung ist weiterhin die Verwendung der auf diese Art hergestellten konzentrierten Lösung oder Flüssigkristalleinstellung der Reaktivfarbstoffe 1 zur Zubereitung von Färbebädern und Druckpasten für die Anwendung auf natürlichen und synthetischen Substraten insbesondere Baumwolle, Wolle, Regeneratcellulose, Papier und Leder.

Die erfindungsgemässe Herstellung der konzentrierten flüssigen Präparationen von Reaktivfarbstoffen mit heterocyclischer Reaktivkomponente erfolgt zweckmässigerweise durch Auflösung oder Dispergieren des salzarmen reaktivgruppenfreien Farbstoffs der Formel

$$(M^2O_3S)_n-A-\underset{\displaystyle R^1}{\underset{|}{N}}-H$$

in wenig Wasser, ggf. in Gegenwart von konzentrationserhöhenden Zusatzstoffen und Umsetzung mit der reaktivkomponentenhaltigen Verbindung R−X (wobei X Chlor oder Fluor bedeutet) und Abstumpfen der dabei entstehenden Säure HX durch Zugabe von Alkalien (wie z. B. NaOH, KOH, $Na_2CO_3$, $K_2CO_3$, LiOH oder $Li_2CO_3$) oder Erdalkalien (wie z. B. CaO, $Ca(OH)_2$) oder Gemische davon auf pH 5 bis 8 und ggf. Zusatz eines Puffersystems (Bereich 6,5 bis 8).

Wird bei der Umsetzung des aminogruppenhaltigen reaktivgruppenfreien Farbstoffs mit der Reaktivkomponente HF frei, so ist es besonders vorteilhaft, gegen Ende der Reaktion zum weiteren Abstumpfen basische Ca-Salze hinzuzufügen, und zwar soviel wie es stöchiometrisch der freiwerdenden Fluorwasserstoffsäure entspricht. Nach Abfiltrieren des ausgefallenen Calciumfluorids enthält so die erfindungsgemäss hergestellte Reaktivfarbstoff-Flüssigeinstellung weniger als 0,5% freies Fluorid.

Für die nach dem erfindungsgemässen Verfahren hergestellten festen Präparationen gilt folgendes.

Als übliche Einstellmittel kommen feste Verbindungen in Frage, die keine Reaktion mit der Reaktivgruppe eingehen, wie z. B. anorganische Salze, besonders bevorzugt LiCl, $Li_2SO_4$ oder Polyphosphate, vorzugsweise aber Nichtelektrolyte wie Polyvinylpyrrolidon, Harnstoff, Salze von wasserlöslicher aromatischer Sulfosäure wie Benzolsulfonsäure und anionische Dispergiermittel wie sulfatierte primäre oder sekundäre aliphatische Alkohole mit 10 bis 18 Kohlenstoffatomen, sulfatierte Fettsäureamide, sulfatierte Alkylenoxyaddukte, sulfatierte partiell veresterte mehrwertige Alkohole, und vor allem Sulfonate, wie langkettige Alkylsulfonate, beispielsweise Laurylsulfonat, Cetylsulfonat, Stearylsulfonat, Mersolate, Natriumdialkylsulfosuccinate, wie Natriumdioctylsulfoccinat, wie Tauride, beispielsweise Oleylmethyltaurid (Natriumsalz), Alkylarylsulfonate, wie Alkylbenzolsulfonate mit gradkettiger oder verzweigter Alkylkette mit 7 bis 20 Kohlenstoffatomen, und Mono- und Dialkylnaphthalinsulfonate, wie Nonylbenzolsulfonat, Dodecylbenzolsulfonat und Hexadecylbenzolsulfonat, sowie 1-Isopropylnapthalin-2-sulfonat, Diisopropylnaphthalinsulfonat, Di-n-butylnaphthalinsulfonat, Diisobutylnaphthalinsulfonat und insbesondere Kondensationsprodukte aus aromatischen Sulfonsäuren und Formaldehyd wie Naphthalinsulfonsäure, Ditolylethersulfonsäuren oder Terphenylsulfonsäuren mit Formaldehyd und/oder Kondensationsprodukte aus Cyclohexanon, Formaldehyd und Bisulfit und/oder Ligninsulfonate. Weiterhin können noch übliche Entstaubungsmittel wie Öle, Öl/Emulgator-Mischungen oder Phthalsäureester zugesetzt werden.

Die nach dem erfindungsgemässen Verfahren hergestellten festen Präparationen von Reaktivfarbstoffen haben vorzugsweise folgende Zusammensetzung.

Der Reaktivfarbstoffgehalt in der erfindungsgemäss hergestellten Präparation liegt bei 20 bis 90 Gew.-% (bevorzugt 30 bis 80 Gew.-%); ausserdem enthält die Einstellung ggf. bis zu 5 Gew.-% Puffersubstanzen für den pH-Wert 6,5 bis 8,5, weiterhin ggf. 10 bis 70% eines konzentrationserhöhenden Zusatzstoffes, 0 bis 50% der üblichen Einstellmittel bzw. Mischungen derer, sowie bis zu 4% Entstaubungsmittel. Gegenstand der Erfindung ist weiterhin die Verwendung der auf diese Art hergestellten Präparationen der Reaktivfarbstoffe 1 mit ausgezeichneter Löslichkeit zur Zubereitung von Färbebädern und Druckpasten für die Anwendung auf natürlichen und synthetischen Substraten insbesondere Baumwolle, Wolle, Regeneratcellulose, Papier und Leder.

Die erfindungsgemässe Herstellung der gut löslichen Präparationen von Reaktivfarbstoffen mit heterocyclischer Reaktivkomponente erfolgt zweckmässigerweise in der Weise, dass der salzarme reaktivgruppenfreie Farbstoff der Formel

$$(M^2O_3S)_n{-}A{-}\underset{\displaystyle R^1}{\underset{|}{N}}{-}H$$

zunächst in wenig Wasser, ggf. in Gegenwart von festen konzentrationserhöhenden Zusatzstoffen dispergiert oder gelöst und mit der reaktivkomponentenhaltigen Verbindung R–X (wobei X Chlor oder Fluor bedeutet) umgesetzt wird. Die dabei entstehende Säure HX wird durch Zugabe von Alkalien (wie z. B. NaOH, KOH, $Na_2CO_3$, $K_2CO_3$, bevorzugt LiOH oder $Li_2CO_3$) oder Erdalkalien wie z. B. CaO, $CaCO_3$, $Ca(OH)_2$ oder Gemischen davon auf pH 5 bis 9 abgestumpft. Man erhält eine konzentrierte Farbstofflösung oder Flüssigkristalleinstellung, die ggf. mit einem Puffer und üblichen Einstellmitteln vermischt und anschliessend zum Erhalt der festen Präparationen getrocknet werden.

Die Farbstoffkonzentration in der Dispersion oder bevorzugt in der Lösung oder Flüssigkristalleinstellung liegt bei 10 bis 40 Gew.-% (bevorzugt bei 13 bis 30 Gew.-%).

Die Einstellmittel und Puffer werden bevorzugt vor dem Trocknen zugesetzt, können aber auch nach der Trocknung mit dem Farbstoff gemahlen und gemischt oder dem gemahlenen Farbstoff zugesetzt werden.

Ist der Reaktivfarbstoff gelöst oder liegt er als Flüssigkristall vor, so kann das ausgefallene $CaF_2$ abfiltriert werden und man erhält nach dem Trocknen eine Farbstoffeinstellung mit weniger als 1 Gew.-% freiem Fluoridanion.

Die erfindungsgemäss hergestellten festen Präparationen zeichnen sich durch eine ausgezeichnete Löslichkeit in heissem und kaltem Wasser aus. Besonders gut ist die Löslichkeit, wenn die Farbstoffe in der bevorzugten Form als Lithiumsalze vorliegen.

Durch die Umsetzung des Farbstoffs

$$(M^2O_3S)_n{-}A{-}\underset{\displaystyle R^1}{\underset{|}{N}}{-}H$$

mit der Reaktivgruppe RX in möglichst wenig Wasser ist der Gehalt an hydrolysiertem Reaktivfarbstoff sehr gering.

Ein weiterer überraschender Vorteil des erfindungsgemässen Verfahrens ist der, dass bei der Herstellung der festen Präparationen nur ein sehr geringer Überschuss der Reaktivkomponente nötig ist.

Die im folgenden aufgeführten Beispiele sollen das erfindungsgemässe Verfahren verdeutlichen.

*Beispiel 1:*

0,3 mol 2-Amino-1-sulfo-5-aminomethylnaphthalin werden diazotiert und auf 0,3 mol 1-(Benzoylamino)-8-hydroxy-3,6-naphthalindisulfonsäure gekuppelt. Der teilweise schon ausgefallene Farbstoff wird durch Zugabe von 15 Gew.-% Ammoniumhydrogencarbonat ausgesalzen, abgesaugt, mit 300 ml gesättigter Ammoniumhydrogencarbonatlösung gewaschen und anschliessend bei 1010 mbar und 60° C bis zur Gewichtskonstanz getrocknet. Der getrocknete salzarme Farbstoff (Salzgehalt: 3%, bezogen auf Farbstoffmenge) wird in 700 ml $H_2O$ unter Zugabe von 3,25 mol ε-Caprolactam gelöst und mit 0,3 mol 2,4,6-Trifluor-5-chlorpyrimidin umgesetzt. Die bei der Reaktion freiwerdende Säure wird durch Zugabe von 0,32 mol festem Lithiumcarbonat abgestumpft, und kurz vor Ende der Reaktion wird zum weiteren Abstumpfen 0,13 mol CaO hinzugegeben. Nach beendigter Reaktion wird die Lösung durch Zugabe von 0,6 Gew.-% Phosphatpuffer auf pH 7 gestellt und filtriert.

Man erhält so eine lagerstabile konzentrierte Farbstofflösung, die 19 Gew.-% des Reaktivfarbstoffs mit folgendem Anion

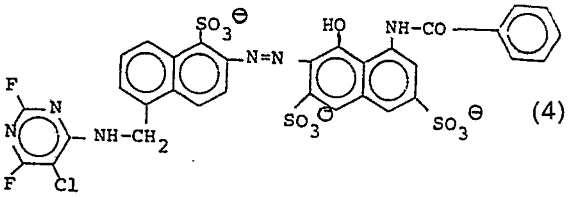

(4)

enthält. Nach Einrühren dieser erfindungsgemäss hergestellten konzentrierten Lösung in Wasser unter Zusatz der für die Reaktivfärberei üblichen Hilfsmittel erhält man eine Farblösung zum Färben von natürlichen und regenerierten Cellulosefasern in roten Tönen.

*Beispiel 2:*

0,3 mol 4-Amino-1-acetylaminobenzol-3-sulfonsäure werden diazotiert und auf 0,3 mol 1-(4-Sulfophenyl)-5-pyrazolon-3-carbonsäure gekuppelt. Nach Verseifen mit Schwefelsäure wird der Farbstoff abgesaugt und mit 400 ml schwefelsaurem Wasser (pH = 3) gewaschen. Der feuchte Presskuchen wird in 450 ml $H_2O$ eingetragen, durch Zugabe von Lithiumhydroxid gelöst und mit 0,33 mol 2,3-Dichlorchinoxalincarbonylchlorid versetzt. Die während der Reaktion freiwerdende Säure wird durch Zugabe von 0,12 mol festem Lithiumcarbonat abgestumpft. Nach beendigter Reaktion wird abgesaugt und mit 0,6 Gew.-% Phosphatpuffer auf pH = 7 gestellt. Man erhält so direkt eine lagerstabile Flüssigkristalleinstellung, die 22 Gew.-% des Reaktivfarbstoffs der Formel

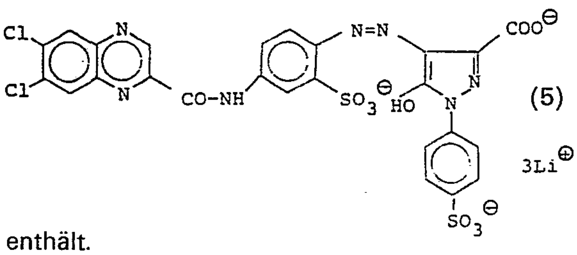

(5)

enthält.

Nach Einrühren dieser erfindungsgemäss hergestellten konzentrierten Flüssigkristallformierung in Wasser unter Zusatz der für die Reaktivfärberei üblichen Hilfsmittel erhält man eine Farblösung zum Färben von natürlichen und regenerierten Cellulosefasern in rotstichig gelben Tönen.

*Beispiel 3:*

0,3 mol des sauren Anthrachinonfarbstoffs 6

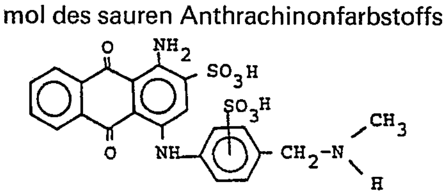

(6)

mit einem Salzgehalt unter 5 Gew.-% werden in 415 ml Wasser und 130 g N,N'-Dimethylharnstoff eingetragen und mit LiOH auf pH = 7 gestellt. Bei 30° C werden langsam 0,33 mol 2,3-Dichlorchinoxalincarbonylchlorid zugegeben. Die während der Reaktion freiwerdende Säure wird durch Zugabe von festem LiOH neutralisiert. Nach beendigter Reaktion werden weitere 130 g N,N'-Dimethylharnstoff zugesetzt, mit 0,6 Gew.-% Puffer auf pH = 8 gestellt und abgesaugt. Man erhält so direkt eine lagerstabile Lösung, die 19 Gew.-% des Reaktivfarbstoffs 7

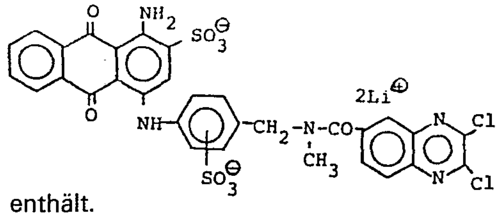

(7)

enthält.

*Beispiel 4:*

0,3 mol 2-Amino-1-sulfo-5-aminomethylnaphthalin werden diazotiert und auf 0,3 mol 1-(Benzoylamino)-8-hydroxy-4-6-naphthalindisulfonsäure gekuppelt. Der ausgefallene Farbstoff wird abgesaugt und mit 300 ml schwefelsaurem Wasser (pH = 1,5) gewaschen. Der Presskuchen (Trockengehalt 31%) wird unter Zugabe von 35 ml Wasser und 2,8 mol ε-Caprolactam angerührt und mit 0,3 mol 2,4,6-Trifluor-5-chlorpyrimidin umgesetzt. Die bei der Reaktion freiwerdende Säure wird durch Zugabe von 0,5 mol $LiOH \cdot H_2O$ abgestumpft und kurz vor Ende der Reaktion wird zum weiteren Abstumpfen 0,12 mol CaO zugesetzt. Nach beendigter Reaktion wird die Lösung durch Zugabe von 0,6 Gew.-% Puffer auf pH = 7 gestellt und vom ausgefallenen $CaSO_4$ bzw. $CaF_2$ abfiltriert. Man erhält so eine lagerstabile konzentrierte Farbstofflösung, die 23 Gew.-% des Reaktivfarbstoffs

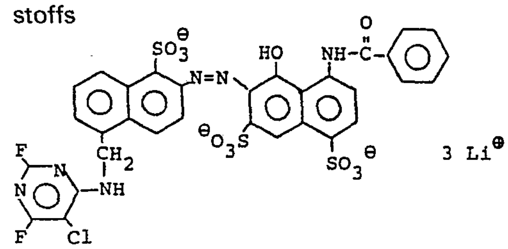

(8)

enthält mit einem Fluoridgehalt 0,1%. Nach Einrühren dieser erfindungsgemäss hergestellten konzentrierten Lösung in Wasser, unter Zusatz der für die Reaktivfärberei üblichen Hilfsmittel, erhält man eine Farblösung zum Färben von natürlichen und regenerierten Cellulosefasern in roten Tönen.

*Beispiel 5:*

1 mol des sauren Anthrachinonfarbstoffs

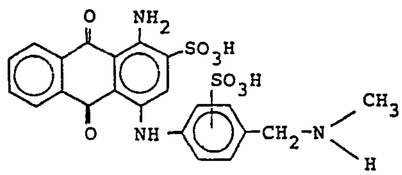

mit einem Salzgehalt unter 6 Gew.-% werden in 2,46 l $H_2O$ unter Zusatz von 2,24 mol N,N'-Dimethylharnstoff und $LiOH \cdot H_2O$ bei pH = 7 gelöst. Man gibt 1 mol Dichlorchinoxalincarbonylchlorid zu und hält den pH-Wert durch Zugabe von 0,5 mol $Li_2CO_3$ und 1 mol $LiOH \cdot H_2O$ während der Reaktion zwischen 7,5 und 8. Die Lösung wird danach für 3 h bei 40° C gehalten und geklärt. Nach Zugabe von 0,05 mol Boratpuffer (pH = 7,0), 0,3 Gew.-% eines Entstaubungsmittels und 11,5 Gew.-% eines entsalzten Kondensationsproduktes aus Naphthalinsulfonsäure mit Formaldehyd wird die erhaltene Lösung sprühgetrocknet. Die so hergestellte Pulvereinstellung des Reaktivfarbstoffs

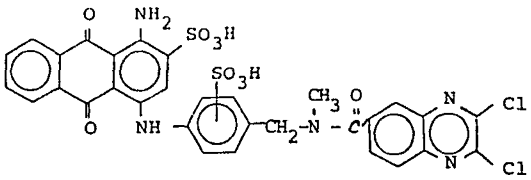

besitzt im Vergleich zu der bisher üblichen Pulvereinstellung synthetisiert nach DE-AS Nr. 1264647 (Vergleich s. unten) die folgenden wesentlich verbesserten Löseeigenschaften

| | Beispiel 1 | Vergleich |
|---|---|---|
| Löslichkeit bei 40° C mit 50 g/l $Na_2SO_4$ + 20 g/l Soda | 33 g/l | 10 g/l |
| Löslichkeit bei 25° C mit 40 g/l Soda | 100 g/l | 20 g/l |

Nach Einrühren dieser erfindungsgemäss hergestellten Reaktivfarbstoffpräparation 1 in kaltes Wasser unter Zusatz der für die Reaktivfärberei üblichen Hilfsmittel erhält man eine Farblösung zum Färben von natürlichen und regenerierten Cellulosefasern in blauem Ton.

*Beispiel 6:*

1 mol des sauren Azofarbstoffs 3 mit folgendem Anion

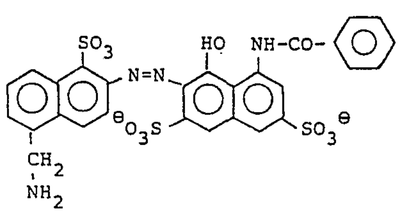

mit einem Salzgehalt ⩽5 Gew.-% werden in 1,14 l Wasser unter Zusatz von 0,16 mol N,N'-Dimethylharnstoff und 0,01 mol ε-Caprolactam in Wasser gelöst. Der Farbstoff wird mit 1 mol 2,4,6-Trifluor-5-chlorpyrimidin umgesetzt, wobei man die bei der Reaktion freiwerdende Säure mit ca. 1,5 mol $LiOH \cdot H_2O$ sowie 0,03 mol CaO abstumpft. Die Farbstofflösung wird nach beendigter Reaktion geklärt, mit 0,2 Gew.-% Boratpuffer auf pH = 7 gestellt und mit einen Kondensationsprodukt aus Naphthalindisulfonsäure mit Formaldehyd auf die gewünschte Farbstärke eingestellt. Nach Sprühtrocknung erhält man eine feste Reaktivfarbstoffpräparation mit ausgezeichneter Löslichkeit. Nach Einrühren dieser erfindungsgemäss hergestellten Reaktivfarbstoffpräparation in Wasser unter Zusatz der für die Reaktivfärberei üblichen Hilfsmittel erhält man eine Farblösung zum Färben von natürlichen und regenerierten Cellulosefasern in roten Tönen.

*Beispiel 7:*

1 mol 4-Amino-1-acetylaminobenzol-3-sulfonsäure werden diazotiert und auf 1 mol 1-(4-Sulfophenyl)-5-pyrazolon-3-carbonsäure gekuppelt.

Nach Verseifen mit Schwefelsäure wird der Farbstoff abgesaugt und mit 1000 ml schwefelsaurem Wasser (pH = 1) gewaschen. Der feuchte Presskuchen wird in 1400 ml $H^2O$ eingetragen, durch Zugabe von Lithiumhydroxyd gelöst und mit 1,1 mol 2,4-Difluor-5-chlor-6-methylpyrimidin umgesetzt. Die bei der Reaktion freiwerdende Säure wird durch Zugabe von Lithiumhydroxid und 0,3 mol CaO abgestumpft. Nach beendigter Reaktion wird geklärt, mit 0,2 Gew.-% Boratpuffer auf pH = 7 gestellt und mit einem Kondensationsprodukt aus Naphthalindisulfonsäure mit Formaldehyd auf die gewünschte Farbstärke eingestellt. Nach Sprühtrocknung erhält man eine feste Reaktivfarbstoffpräparation mit ausgezeichneter Löslichkeit. Unter Zusatz der für den Reaktivdruck üblichen Hilfsmittel eignet sich diese Farbstoffpräparation zum Bedrucken von natürlichen und regenerierten Cellulosefasern in rotstichig gelben Tönen.

*Beispiel 8:*

1 Mol des sauren Azofarbstoffs 4 mit folgendem Anion

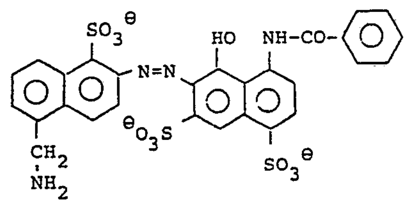

mit einem Salzgehalt unter 5 Gew.-% werden in 1,3 l Wasser unter Zusatz von 0,18 mol N,N'-Dimethylharnstoff und 0,01 mol ε-Caprolactam in Wasser gelöst. Der Farbstoff wird mit 1 mol 2,4,6-Trifluor-5-chlorpyrimidin umgesetzt, wobei man die bei der Reaktion freiwerdende Säure mit ca. 1,5 mol $LiOH \cdot H_2O$ sowie 0,03 mol CaO abstumpft. Die Farbstofflösung wird nach beendigter Reaktion geklärt, mit 0,2 Gew.-% Boratpuffer auf pH = 7 gestellt und mit einem Kondensationsprodukt aus Naphthalindisulfonsäure mit Formaldehyd auf die gewünschte Farbstärke eingestellt. Nach Sprühtrocknung erhält man eine feste Reaktivfarbstoffpräparation mit ausgezeichneter Löslichkeit. Nach Einrühren dieser erfindungsgemäss hergestellten Reaktivfarbstoffpräparation in Wasser unter Zusatz der für die Reaktivfärberei üblichen Hilfsmittel erhält man eine Farblösung zum Färben von natürlichen und regenerierten Cellulosefasern in roten Tönen.

## Patentansprüche

1. Verfahren zur Herstellung von Präparationen von Reaktivfarbstoffen der Formel

$$(M^1O_3S)_n{-}A{-}\underset{R^1}{\underset{|}{N}}{-}H \qquad (1)$$

worin

$M^1 = NH_4$, Li, Na oder K,

R = heterocyclischer Reaktivrest,
$R^1$ = Wasserstoff oder Alkyl ($C_1$-$C_4$),
A = Rest eines Farbstoffchromophors, und
n = eine ganze Zahl von 1 bis 5,
dadurch gekennzeichnet, dass man einen sulfogruppenhaltigen und reaktivgruppenfreien Farbstoff der Formel

$$(M^2O_3S)_n{-}A{-}\underset{\displaystyle R^1}{\underset{|}{N}}{-}H \qquad (2)$$

wobei
$M^2$ = H, $NH_4$, Li, Na oder K und
worin
$R^1$, n und A die oben angegebene Bedeutung besitzen,
mit einem Salzgehalt von höchstens 8 Gew.-% (bezogen auf die Farbstoffmenge) im wässerigen, ggf. konzentrationserhöhende Zusatzstoffe enthaltenden Medium in Gegenwart eines säurebindenden Mittels mit der heterocyclischen Reaktivkomponente der Formel

$$R{-}X \qquad (1b)$$

(wobei R die oben angegebene Bedeutung besitzt und X für Fluor oder Chlor steht) umsetzt, und die so erhaltene Flüssigeinstellung ggf. puffert oder die Flüssigeinstellung zur Trockene bringt und anschliessend ggf. zu einem Pulver mahlt.

2. Verfahren gemäss Anspruch 1, dadurch gekennzeichnet, dass man als Reaktivkomponente der Formel R–X eine Verbindung der Formeln

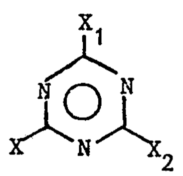 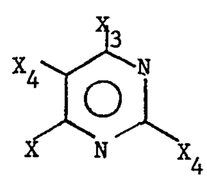

und 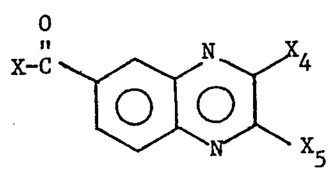

einsetzt, wobei
X = Cl, F
$X_1$ = F
$X_2$ = Cl, F, $NH_2$, $OR^2$, $CH_2R^2$, $SR^2$
$X_3$ = Cl, F, $CH_3$
$X_4$ = Cl, F
$X_5$ = Cl, F, $CH_3$
und wobei $R^2$ = Wasserstoff, Alkyl, Aryl, Aralkyl.

3. Verfahren gemäss den Ansprüchen 1 und 2, dadurch gekennzeichnet, dass es sich bei den konzentrationserhöhenden Zusatzstoffen um niedere aliphatische oder cyclische Amide und/oder schwefelhaltige Verbindungen und/oder hydrotrope Verbindungen handelt.

4. Verfahren gemäss Anspruch 1, dadurch gekennzeichnet, dass es sich bei dem säurebindenden Mittel um eine Verbindung der Reihe NaOH, KOH, $Na_2CO_3$, $K_2CO_3$, CaO, $Ca(OH)_2$, LiOH, $Li_2CO_3$ handelt.

5. Verfahren gemäss Anspruch 1, dadurch gekennzeichnet, dass man zum Erhalt von festen Präparationen die Trocknung der Flüssigeinstellung mit Hilfe des Sprühtrocknungsverfahrens durchführt.

6. Verfahren gemäss Anspruch 1, dadurch gekennzeichnet, dass man zum Erhalt von festen Präparationen vor und/oder nach dem Trocknen der Flüssigeinstellung Einstellmittel und/oder Puffersubstanzen, die einen pH-Wert von 6,5 bis 8 stabilisieren, untermischt.

7. Verwendung der gemäss den Ansprüchen 1 bis 6 hergestellten Präparationen zur Zubereitung von Färbebädern und Druckpasten für natürliche und synthetische Substrate.

**Claims**

1. Process for producing preparations of reactive dyestuffs of the formula

$$(M^1O_3S)_n{-}A{-}\underset{\displaystyle R^1}{\underset{|}{N}}{-}H \qquad (1)$$

wherein
$M^1$ = $NH_4$, Li, Na or K,
R = heterocyclic reactive radical,
$R^1$ = hydrogen or alkyl ($C_1$-$C_4$),
A = radical of a dyestuff chromophore, and
n = an integer from 1 to 5,
characterised in that a dyestuff which contains sulpho groups is free of reactive groups and has the formula

$$(M^2O_3S)_n{-}A{-}\underset{\displaystyle R^1}{\underset{|}{N}}{-}H \qquad (2)$$

wherein $M^2$ = H, $NH_4$, Li, Na or K, and wherein $R^1$, n and A have the above-mentioned meaning,
and which contains at most 8% by weight of salt (relative to the amount of dyestuff), is reacted in an aqueous medium which, if desired, also contains concentration-increasing additives, in the presence of an acid-binding agent, with the heterocyclic reactive component of the formula

$$R{-}X \qquad (1b)$$

(wherein R has the above-mentioned meaning and X represents fluorine or chlorine), and the liquid formulation thus obtained is buffered if appropriate or the liquid formulation is brought to dryness and then, if desired, ground to a powder.

2. Process according to Claim 1, characterised in that the reactive component of the formula R–X which is used is a compound of the formulae

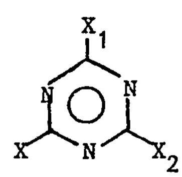 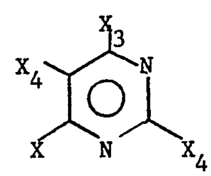

and 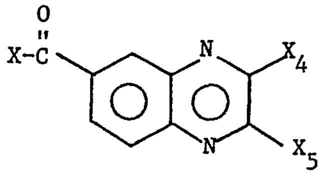

wherein
X = Cl or F,
$X_1$ = F,
$X_2$ = Cl, F, $NH_2$, $OR^2$, $CH_2R^2$ or $SR^2$,
$X_3$ = Cl, F or $CH_3$,
$X_4$ = Cl or F,
$X_5$ = Cl, F or $CH_3$,
and wherein $R^2$ = hydrogen, alkyl, aryl or aralkyl.

3. Process according to Claims 1 and 2, characterised in that the concentration-increasing additives are lower aliphatic or cyclic amides and/or sulphur-containing compounds and/or hydrotropic compounds.

4. Process according to Claim 1, characterised in that the acid-binding agent is a compound of the series comprising NaOH, KOH, $Na_2CO_3$, $K_2CO_3$, CaO, $Ca(OH)_2$, LiOH and $Li_2CO_3$.

5. Process according to Claim 1, characterised in that to obtain solid preparations the liquid formulation is dried by means of the spray-drying process.

6. Process according to Claim 1, characterised in that to obtain solid preparations standardising agents and/or buffer substances which stabilise a pH value of 6.5-8 are admixed before and/or after the liquid formulation has been dried.

7. Use of the preparations produced according to Claims 1 to 6, for making up dyebaths and print pastes for natural and synthetic substrates.

## Revendications

1. Procédé de préparation de compositions de colorants réactifs de formule

$$(M^1O_3S)_n-A-\underset{\displaystyle R^1}{\underset{|}{N}}-H \qquad (1)$$

dans laquelle
$M^1$ = $NH_4$, Li, Na ou K,
R = reste réactif hétérocyclique,
$R^1$ = hydrogène ou alkyle en $C_1$-$C_4$,
A = reste d'un chromophore de colorant, et
n = nombre entier de 1 à 5,
caractérisé en ce que l'on fait réagir un colorant contenant des groupes sulfo et exempt de groupes réactifs, de formule

$$(M^2O_3S)_n-A-\underset{\displaystyle R^1}{\underset{|}{N}}-H \qquad (2)$$

dans laquelle $M^2$ = H, $NH_4$, Li, Na ou K, et $R^1$, n et A ont les significations indiquées ci-dessus, à une teneur en sels de 8% en poids au maximum (par rapport à la quantité de colorant), en milieu aqueux contenant éventuellement des additifs qui accroissent la concentration, en présence d'un agent neutralisant les acides, avec le composant réactif hétérocyclique de formule

$$R-X \qquad (1b)$$

(dans laquelle R a la signification indiquée ci-dessus et X représente le fluor ou le chlore) et, le cas échéant, on tamponne la composition liquide obtenue ou on amène la composition liquide à sec et on broie ensuite, le cas échéant, en poudre.

2. Procédé selon la revendication 1, caractérisé en ce que l'on utilise en tant que composant réactif de formule R−X un composé des formules

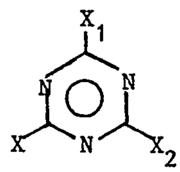 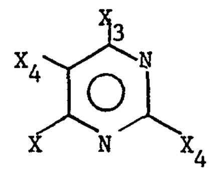

et 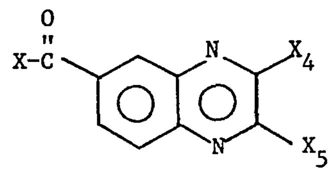

dans lesquelles
X = Cl, F,
$X_1$ = F,
$X_2$ = Cl, F, $NH_2$, $OR^2$, $CH_2R^2$, $SR^2$,
$X_3$ = Cl, F, $CH_3$,
$X_4$ = Cl, F,
$X_5$ = Cl, F, $CH_3$, et
$R_2$ = hydrogène, alkyle, aryle, aralkyle.

3. Procédé selon les revendications 1 et 2, caractérisé en ce que les additifs accroissant la concentration sont des amides aliphatiques inférieurs ou cycliques et/ou des composés du soufre et/ou des composés hydrotropes.

4. Procédé selon la revendication 1, caractérisé en ce que l'agent neutralisant les acides est un composé de la classe NaOH, KOH, $Na_2CO_3$, $K_2CO_3$, CaO, $Ca(OH)_2$, LiOH, $Li_2CO_3$.

5. Procédé selon la revendication 1, caractérisé en ce que, pour obtenir des compositions solides, on sèche les compositions liquides par atomisation.

6. Procédé selon la revendication 1, caractérisé en ce que, pour obtenir les compositions solides, on mélange, avant et/ou après séchage de la composition liquide, des charges et/ou des substances-tampons stabilisant à un pH de 6,5 à 8.

7. Utilisation des compositions préparées selon les revendications 1 à 6 pour la préparation de bains de teinture et de pâtes d'impression pour substrats naturels et synthétiques.